(19) Europäisches Patentamt
European Patent Office
Office européen des brevets

(11) **EP 4 530 681 A1**

(12) **EUROPEAN PATENT APPLICATION**
published in accordance with Art. 153(4) EPC

(43) Date of publication:
**02.04.2025 Bulletin 2025/14**

(21) Application number: **24752878.9**

(22) Date of filing: **06.02.2024**

(51) International Patent Classification (IPC):
**G01T 1/38** (2006.01)

(52) Cooperative Patent Classification (CPC):
**G01T 1/38; G01T 7/00**

(86) International application number:
**PCT/CN2024/076343**

(87) International publication number:
**WO 2024/165023 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 CN 202310134373**

(71) Applicants:
• **Nuctech (Beijing) Company Limited**
  **Beijing 101500 (CN)**
• **NUCTECH COMPANY LIMITED**
  **Beijing 100084 (CN)**
• **Tsinghua University**
  **Haidian District,**
  **Beijing 100084 (CN)**

(72) Inventors:
• **JIN, Zengxue**
  **Beijing 100084 (CN)**
• **ZHAO, Kun**
  **Beijing 100084 (CN)**
• **WU, Yao**
  **Beijing 100084 (CN)**
• **HU, Chunxuan**
  **Beijing 100084 (CN)**
• **LI, Yulan**
  **Beijing 100084 (CN)**
• **ZHANG, Tong**
  **Beijing 100084 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **ENERGY CALIBRATION DETERMINING METHOD AND APPARATUS FOR RADIOACTIVE DETECTOR, DEVICE, AND MEDIUM**

(57) Provided are a method and an apparatus for determining an energy calibration of a radiation detector, a device, and a medium. The method includes: acquiring (S110) a background energy spectrum of a plurality of known nuclides, where the background energy spectrum is obtained by the radiation detector detecting the plurality of known nuclides; performing (S120) differential processing on the background energy spectrum to obtain a channel address-difference diagram, where the channel address-difference diagram includes a plurality of valid peak information determined from a plurality of full-energy peak information; determining (S130) a target coefficient according to the channel address-difference diagram, where the target coefficient characterizes a calibration coefficient in initial energy channel address function; and determining (S140) a target energy channel address function according to the channel address-difference diagram and the initial energy channel address function, where the target energy channel address function characterizes the energy calibration of the radiation detector. The apparatus for determining an energy calibration of a radiation detector includes an acquisition module (610), a differencing module (620), a first determination module (630), and a second determination module (640).

EP 4 530 681 A1

S110

A background energy spectrum of a plurality of known nuclides is acquired, where the background energy spectrum is obtained by the radiation detector detecting the plurality of known nuclides

S120

A differential processing is performed on the background energy spectrum to obtain a channel address-difference diagram

S130

A target coefficient is determined according to the channel address-difference diagram, where the target coefficient characterizes a calibration coefficient in an initial energy channel function

S140

A target energy channel function is determined according to the channel address-difference diagram and the initial energy channel function

FIG. 1

**Description**

This application claims priority to Chinese Patent Application No. 202310134373.7 filed on February 9, 2023, the content of which is incorporated herein by reference in its entirety.

TECHNICAL FIELD

The present disclosure relates to a field of environmental monitoring, in particular to a method and an apparatus for determining an energy calibration of a radiation detector, a device, a medium, and a program product.

BACKGROUND

Environmental radiation monitoring is an important part of environmental monitoring, and also a basis of environmental radiation management. A prevention and control of environmental radioactive pollution is also one of hot spots of public concern. In order to ensure an accuracy of a detection result, it is needed to periodically perform an energy calibration on a detector system.

In a process of the energy calibration, it is generally to use a common detector device to detect and measure $\gamma$ radionuclides in an environmental sample to obtain $\gamma$ spectrum information of the sample, that is, a relationship between photon count and channel address, and then the energy calibration may be performed on the detector according to a quadratic non-linear relationship between energy and channel address. However, due to an influence of changes in surrounding environmental conditions and of the system per se, it is needed to periodically perform an energy calibration on the detector system to ensure the accuracy of the detection result of the detector.

SUMMARY

The present disclosure provides a method and an apparatus for determining an energy calibration of a radiation detector, a device, a medium, and a program product for improving a correction speed of an energy calibration of a radiation detector.

According to a first aspect of the present disclosure, a method for determining an energy calibration of a radiation detector is provided, including: acquiring a background energy spectrum of a plurality of known nuclides, where the background energy spectrum is obtained by the radiation detector detecting the plurality of known nuclides; performing a differential processing on the background energy spectrum to obtain a channel address-difference diagram, where the channel address-difference diagram includes a plurality of valid peak information determined from a plurality of full-energy peak information; determining a target coefficient according to the channel address-difference diagram, where the target coefficient characterizes a calibration coefficient in an initial energy channel address function; and determining a target energy channel address function according to the channel address-difference diagram and the initial energy channel address function, where the target energy channel address function characterizes the energy calibration of the radiation detector.

According to the embodiments of the present disclosure, the determining a target coefficient according to the channel address-difference diagram includes: determining a plurality of target intervals of a target nuclide from the channel address-difference diagram, where the target intervals include a plurality of valid peak information of the target nuclide; and determining the target coefficient according to the plurality of target intervals.

According to the embodiments of the present disclosure, the determining the target coefficient according to the plurality of target intervals includes: obtaining, for each target interval, an initial weight according to a plurality of full-energy peak weighting coefficients and difference coefficients of the plurality of full-energy peak information; and determining the target coefficient according to a plurality of initial weights based on a predetermined filtering rule.

According to the embodiments of the present disclosure, the obtaining an initial weight according to a plurality of full-energy peak weighting coefficients and difference coefficients of the plurality of full-energy peak information includes: determining, for each valid peak information, a product value according to the full-energy peak weighting coefficient corresponding to the valid peak information and the difference coefficient at a full-energy peak energy channel address in the valid peak information; and summing a plurality of product values to obtain the initial weight of the target interval.

According to the embodiments of the present disclosure, the differential processing includes a second-order differential processing, and the difference coefficient includes a second-order difference coefficient.

According to the embodiments of the present disclosure, the determining the target coefficient according to a plurality of initial weights based on a predetermined filtering rule includes: drawing a weight-coefficient relationship diagram according to the plurality of initial weights, where a horizontal ordinate in the weight-coefficient relationship diagram represents a coefficient scale, and a vertical ordinate in the weight-coefficient relationship diagram represents a weight scale; and determining the horizontal ordinate corresponding to a maximum weight value in the weight-coefficient relationship diagram as the target coefficient.

According to the embodiments of the present disclosure, the determining a target energy channel address function according to the channel address-difference diagram and the initial energy channel address function includes: constructing a plurality of coordinate points in a channel address-energy coordinate system according to a channel address corresponding to each full-energy peak information in each target interval and a known full-energy peak energy of the target nuclide; and solving, based on the target coefficient, the initial energy channel address function according to the plurality of coordinate points to obtain the target energy channel address function.

According to the embodiments of the present disclosure, the solving the initial energy channel address function according to the plurality of coordinate points to obtain the target energy channel address function includes: fitting the plurality of coordinate points in the channel address-energy coordinate system to obtain a target curve; solving the initial energy channel address function by using the target curve to obtain a constant term coefficient and a quadratic term coefficient, where the target coefficient characterizes a primary term coefficient; and obtaining, based on the initial energy channel address function, the target energy channel address function according to the constant term coefficient, the target coefficient and the quadratic term coefficient.

According to the embodiments of the present disclosure, the initial weight is expressed by a first equation, and the initial energy channel address function is expressed by a second equation.

$$W_j = \sum_{i=1}^{m} \left( w_{i,j} \times \sec_{i,j} \right)$$

$$E = c_0 + c_1 \times ch + c_2 \times ch^2$$

wherein $W_j$ represents an initial weight of a $j^{th}$ target interval; $w_{i,j}$ represents an $i^{th}$ full-energy peak weighting coefficient in the $j^{th}$ target interval; $\sec_{i,j}$ represents a difference coefficient at an $i^{th}$ full-energy peak energy channel address in the $j^{th}$ target interval, E represents a full-energy peak energy of $\gamma$-rays, ch represents a channel address of a full-energy peak of the rays, and $c_0$, $c_1$ and $c_2$ are a constant term coefficient, a target coefficient and a quadratic term coefficient to be calculated, respectively.

According to a second aspect of the present disclosure, an apparatus for determining an energy calibration of a radiation detector is provided, including: an acquisition module configured to acquire a background energy spectrum of a plurality of known nuclides, where the background energy spectrum is obtained by the radiation detector detecting the plurality of known nuclides; a differencing module configured to perform a differential processing on the background energy spectrum to obtain a channel address-difference diagram, where the channel address-difference diagram includes a plurality of valid peak information determined from a plurality of full-energy peak information; a first determination module configured to determine a target coefficient according to the channel address-difference diagram, where the target coefficient characterizes a calibration coefficient in an initial energy channel address function; and a second determination module configured to determine a target energy channel address function according to the channel address-difference diagram and the initial energy channel address function, where the target energy channel address function characterizes the energy calibration of the radiation detector.

According to a third aspect of the present disclosure, an electronic device is provided, including: one or more processors; a storage means for storing one or more programs, where the one or more programs are configured to, when executed by the one or more processors, cause the one or more processors to implement the method for determining the energy calibration of the radiation detector as described above.

According to a fourth aspect of the present disclosure, a computer readable storage medium having executable instructions thereon is provided, where the instructions are configured to, when executed by a processor, cause the processor to implement the method for determining the energy calibration of the radiation detector as described above.

According to a fifth aspect of the present disclosure, a computer program product containing a computer program is provided, where the computer program is configured to, when executed by a processor, cause the processor to implement the method for determining the energy calibration of the radiation detector as described above.

BRIEF DESCRIPTION OF THE DRAWINGS

The above contents and other objectives, features and advantages of the present disclosure will be more apparent through the following descriptions of embodiments of the present disclosure with reference to the accompanying drawings. In the accompanying drawings:

FIG. 1 schematically shows a flowchart of a method for determining an energy calibration of a radiation detector according to the embodiments of the present disclosure;

FIG. 2 schematically shows a schematic diagram of a background energy spectrum according to the embodiments of the present disclosure;

FIG. 3 schematically shows a channel address-difference diagram according to the embodiments of the present disclosure;

FIG. 4 schematically shows a weight-coefficient relationship diagram according to the embodiments of the present disclosure;

FIG. 5 schematically shows a schematic diagram of a channel address-energy coordinate system according to the embodiments of the present disclosure;

FIG. 6 schematically shows a structure block diagram of an apparatus for determining an energy calibration of a radiation detector according to the embodiments of the present disclosure; and

FIG. 7 schematically shows a block diagram of an electronic device suitable for implementing the method for determining the energy calibration of the radiation detector according to the embodiments of the present disclosure.

DETAILED DESCRIPTION OF EMBODIMENTS

Embodiments of the present disclosure will be described below with reference to the accompanying drawings. However, it should be understood that these descriptions are just exemplary and are not intended to limit the scope of the present disclosure. In the following detailed description, for ease of interpretation, many specific details are set forth to provide comprehensive understanding of the embodiments of the present disclosure. However, it is clear that one or more embodiments may also be implemented without these specific details. In addition, in the following description, descriptions of well-known structures and technologies are omitted to avoid unnecessarily obscuring concepts of the present disclosure.

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or overly rigid manner.

In a case of using the expression similar to "at least one of A, B and C", it should be explained according to the meaning of the expression generally understood by those skilled in the art (for example, "a system including at least one of A, B and C" should include but not be limited to a system including A alone, a system including B alone, a system including C alone, a system including A and B, a system including A and C, a system including B and C, and/or a system including A, B and C).

The embodiments of the present disclosure provide a method and an apparatus for determining an energy calibration of a radiation detector, a device, and a medium. The method includes: acquiring a background energy spectrum of a plurality of known nuclides, where the background energy spectrum is obtained by the radiation detector detecting the plurality of known nuclides; performing a differential processing on the background energy spectrum to obtain a channel address-difference diagram, where the channel address-difference diagram includes a plurality of valid peak information determined from a plurality of full-energy peak information; determining a target coefficient according to the channel address-difference diagram, where the target coefficient characterizes a calibration coefficient in an initial energy channel address function; and determining a target energy channel address function according to the channel address-difference diagram and the initial energy channel address function, where the target energy channel address function characterizes the energy calibration of the radiation detector.

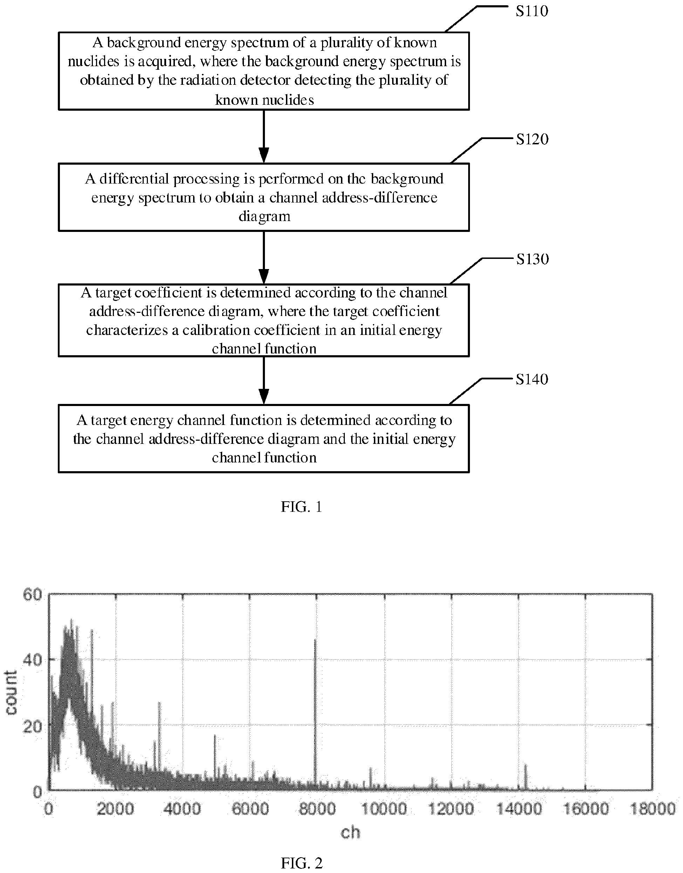

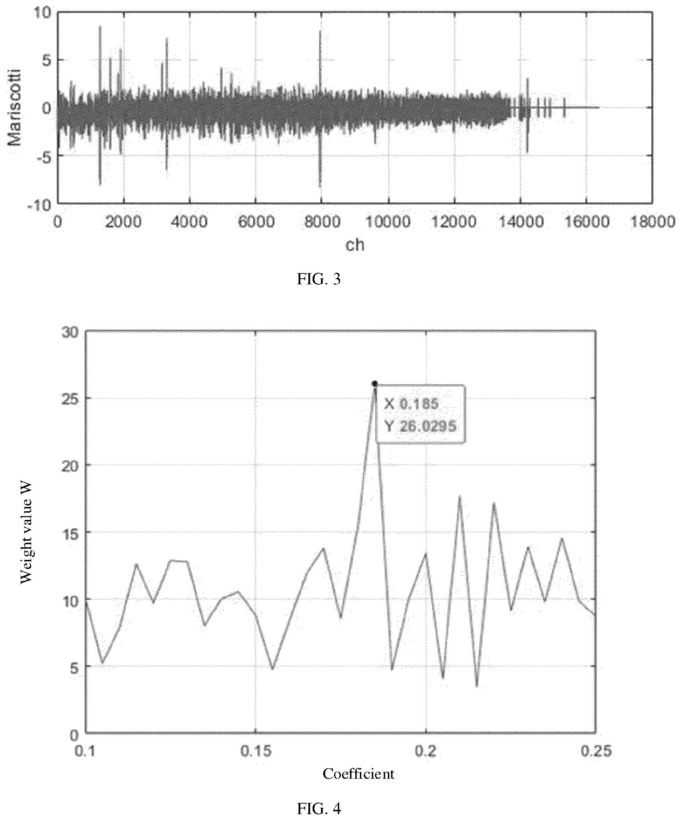

FIG. 1 schematically shows a flowchart of a method for determining an energy calibration of a radiation detector according to the embodiments of the present disclosure. FIG. 2 schematically shows a schematic diagram of a background energy spectrum according to the embodiments of the present disclosure. FIG. 3 schematically shows a channel address-difference diagram according to the embodiments of the present disclosure.

As shown in FIG. 1, the method for determining the energy calibration of the radiation detector includes operations S110 to S140.

In operation S110, a background energy spectrum of a plurality of known nuclides is acquired, where the background energy spectrum is obtained by the radiation detector detecting the plurality of known nuclides.

In operation S120, a differential processing is performed on the background energy spectrum to obtain a channel address-difference diagram, where the channel address-difference diagram includes a plurality of valid peak information determined from a plurality of full-energy peak information.

In operation S130, a target coefficient is determined according to the channel address-difference diagram, where the target coefficient characterizes a calibration coefficient in an initial energy channel address function.

In operation S140, a target energy channel address function is determined according to the channel address-difference diagram and the initial energy channel address function, where the target energy channel address function characterizes the energy calibration of the radiation detector.

According to the embodiments of the present disclosure, the energy calibration refers to an experimental work for determining a correspondence relationship between an energy of incident particles in a radiation detector and a channel address of a multi-channel address analyzer. The radiation detector is generally installed in an outdoor environment to be detected. After the radiation detector works for a period of time, it is needed to correct the energy calibration of the radiation detector to ensure a detection accuracy of the radiation detector.

According to the embodiments of the present disclosure, the channel address refers to an energy interval, and a natural number label of the energy thereof is the channel address. The full-energy peak information refers to a spectrum peak formed by a pulse output by the detector when all the energy of incident rays is lost in a sensitive volume of the detector. The valid peak information refers to a full-energy peak information of a known nuclide determined from a plurality of full-energy peak information of a plurality of known nuclides. The known nuclides may include thorium (Th-232), radium (Ra-226), potassium (K-40), etc.

According to the embodiments of the present disclosure, it is possible to obtain the background energy spectrum of the plurality of known nuclides as shown in FIG. 2 by detecting the plurality of known nuclides using the radiation detector. It is possible to obtain the channel address-difference diagram as shown in FIG. 3 by performing a differential processing on the background energy spectrum, such as performing a second-order differential processing using Mariscotti method. The channel address-difference diagram clearly shows the valid peak information of the plurality of known nuclides. Based on the channel address-difference diagram, a target coefficient may be determined, which is a second-order coefficient of the initial energy channel address function. Then, a target energy channel address function may be determined according to the target coefficient, the channel address-difference diagram and the initial energy channel address function, and an energy calibration of the radiation detector may be corrected based on the target energy channel address function.

According to the embodiments of the present disclosure, it is possible to obtain a channel address-difference diagram by performing a differential processing on the background energy spectrum obtained by detecting a plurality of known nuclides using the radiation detector to be corrected, determine a target coefficient in the initial energy channel address function based on the channel address-difference diagram, and determine a target energy channel address function by combining the channel address-difference diagram and the initial energy channel address function, so that the energy calibration of the radiation detector to be corrected may be corrected using the target energy channel address function, which may avoid a problem of an inaccurate detection result of the corrected radiation detector caused by manually performing an energy calibration using a radioactive source in the related art, and improve a correction efficiency and detection accuracy of the radiation detector.

According to the embodiments of the present disclosure, determining the target coefficient according to the channel address-difference diagram includes the following operations: determining a plurality of target intervals of a target nuclide from the channel address-difference diagram, where the target intervals include a plurality of valid peak information of the target nuclide; and determining the target coefficient according to the plurality of target intervals.

According to the embodiments of the present disclosure, the target interval is determined according to the valid peak information of a known nuclide, where the valid peak information is known before correction. For example, it is known that the target intervals of thorium include $[c_1, c_2]$, $[c_3, c_4]$ and $[c_5, c_6]$, where $c_i$ represents a horizontal ordinate scale of the channel address-difference diagram, and a specific value is related to the specific full-energy peak information of the target nuclide.

According to the embodiments of the present disclosure, after the plurality of target intervals are determined, the target coefficient may be determined according to the channel address-difference diagram corresponding to the plurality of target intervals.

According to the embodiments of the present disclosure, determining the target coefficient according to the plurality of target intervals includes the following operations: obtaining, for each target interval, an initial weight according to a plurality of full-energy peak weighting coefficients and difference coefficients of the plurality of full-energy peak information; and determining the target coefficient according to a plurality of initial weights based on a predetermined filtering rule.

According to the embodiments of the present disclosure, for each target interval, an initial weight of the target interval may be obtained according to the plurality of valid peak information in the target interval, such as the full-energy peak weighting coefficient corresponding to each valid peak information and a difference coefficient at the valid peak information during the differential processing. The target coefficient is finally determined from a plurality of initial weights using a predetermined filtering rule.

It should be noted that the full-energy peak weighting coefficient is a weighting coefficient of a full-energy peak energy, which may be specifically set by the staff according to actual needs.

According to the embodiments of the present disclosure, obtaining the initial weight according to the plurality of full-energy peak weighting coefficients and the difference coefficients of the plurality of full-energy peak information includes the following operations: determining, for each valid peak information, a product value according to the full-energy peak weighting coefficient corresponding to the valid peak information and the difference coefficient at a full-energy peak energy channel address in the valid peak information; and summing a plurality of product values to obtain the initial weight of the target interval.

According to the embodiments of the present disclosure, when calculating the initial weight of each target interval, for each valid peak information in the target interval, the full-energy peak weighting coefficient and the difference coefficient corresponding to the valid peak information may be multiplied to obtain a product value, then a plurality of product values corresponding to the plurality of valid peak information may be summed, and a summed result is determined as the initial weight of the target interval.

According to the embodiments of the present disclosure, the differential processing includes a second-order differential processing, and the difference coefficient includes a second-order difference coefficient.

It should be noted that the second-order differential processing method used in the present disclosure is Mariscotti method, but the present disclosure is not limited to using the method only.

FIG. 4 schematically shows a weight-coefficient relationship diagram according to the embodiments of the present disclosure.

According to the embodiments of the present disclosure, determining the target coefficient according to the plurality of initial weights based on the predetermined filtering rule includes the following operations: drawing a weight-coefficient relationship diagram according to the plurality of initial weights, where a horizontal ordinate in the weight-coefficient relationship diagram represents a coefficient scale, and a vertical ordinate in the weight-coefficient relationship diagram represents a weight scale; and determining the horizontal ordinate corresponding to a maximum weight value in the weight-coefficient relationship diagram as the target coefficient.

According to the embodiments of the present disclosure, after the initial weight of each target interval is determined, a weight-coefficient relationship diagram may be drawn based on the plurality of initial weights, as shown in FIG. 4. In the weight-coefficient relationship diagram, each of the initial weights is drawn, and points are connected. A maximum weight value may be determined according to the drawn diagram, and the horizontal ordinate corresponding to the maximum weight value may be determined as the target coefficient. For example, as show in FIG. 4, the horizontal ordinate $X = 0.185$ corresponding to $Y = 26.0295$ is determined as the target coefficient. Then, a target energy channel address function may be determined according to the channel address-difference diagram and the initial energy channel address function.

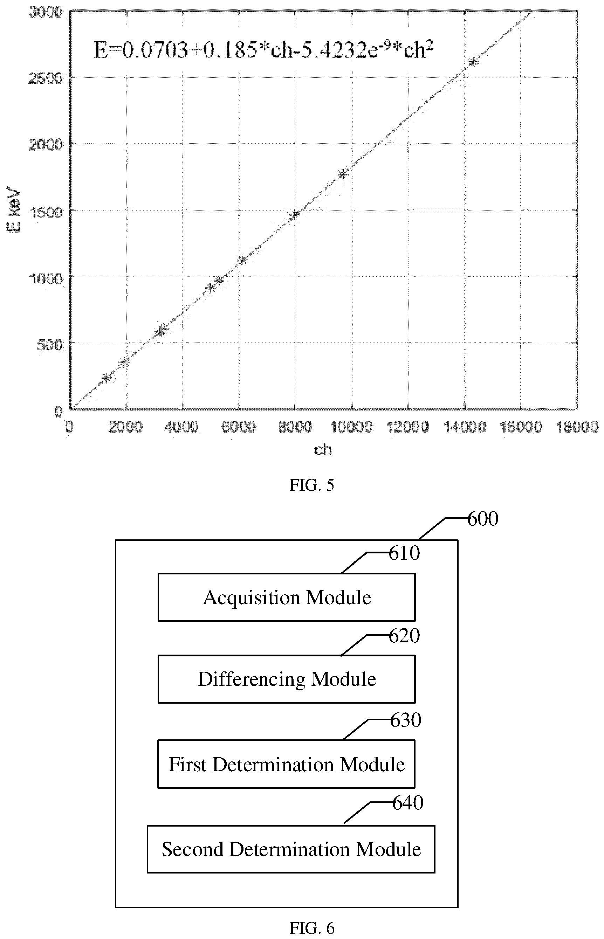

FIG. 5 schematically shows a schematic diagram of a channel address-energy coordinate system according to the embodiments of the present disclosure.

According to the embodiments of the present disclosure, determining a target energy channel address function according to the channel address-difference diagram and the initial energy channel address function includes the following operations: constructing a plurality of coordinate points in a channel address-energy coordinate system according to a channel address corresponding to each full-energy peak information in each target interval and a known full-energy peak energy of the target nuclide; and solving, based on the target coefficient, the initial energy channel address function according to the plurality of coordinate points to obtain the target energy channel address function.

According to the embodiments of the present disclosure, since the known full-energy peak energy of the target nuclide is a value determined before the correction, it is possible to mark an energy coordinate of each full-energy peak in the channel address-energy coordinate system by combining the channel address corresponding to each full-energy peak information in the target interval, and thus a plurality of coordinate points with respect to the full-energy peak information may be obtained.

According to the embodiments of the present disclosure, since the target coefficient has been determined, other coefficients in the initial energy channel address function may be calculated according to the plurality of coordinate points drawn in the channel address-energy coordinate system as shown in FIG. 5, and then the final target energy channel address function may be obtained, as shown in FIG. 5.

According to the embodiments of the present disclosure, solving the initial energy channel address function according to the plurality of coordinate points to obtain the target energy channel address function includes the following operations: fitting the plurality of coordinate points in the channel address-energy coordinate system to obtain a target curve; solving the initial energy channel address function by using the target curve to obtain a constant term coefficient and a quadratic term coefficient, where the target coefficient characterizes a primary term coefficient; and obtaining, based on the initial energy channel address function, the target energy channel address function according to the constant term coefficient, the target coefficient and the quadratic term coefficient.

According to the embodiments of the present disclosure, the plurality of coordinate points are fitted in the channel address-energy coordinate system to obtain a target curve, where the purpose of fitting is to finally obtain a more accurate target energy channel address function, so as to ensure a detection accuracy of the finally-corrected radiation detector when in use.

According to the embodiments of the present disclosure, after obtaining the target curve, it is possible to calculate the constant term coefficient and the quadratic term coefficient in the initial energy channel address function by using the target curve, and finally construct a target energy channel address function according to the determined target coefficient, constant term coefficient and quadratic term coefficient.

According to the embodiments of the present disclosure, the initial weight is expressed by Equation (1) and the initial energy channel address function is expressed by Equation (2).

$$W_j = \sum_{i=1}^{m} \left( w_{i,j} \times \sec_{i,j} \right) \quad (1)$$

$$E = c_0 + c_1 \times ch + c_2 \times ch^2 \quad (2)$$

where $W_j$ represents an initial weight of a $j^{th}$ target interval, $w_{i,j}$ represents an $i^{th}$ full-energy peak weighting coefficient in the $j^{th}$ target interval, $\sec_{i,j}$ represents a difference coefficient at an $i^{th}$ full-energy peak energy channel address in the $j^{th}$ target interval, E represents a full-energy peak energy of $\gamma$-rays, ch represents a full-energy peak channel address of the rays, and $c_0$, $c_1$ and $c_2$ are a constant term coefficient, a target coefficient and a quadratic term coefficient to be calculated, respectively.

In some embodiments, the quadratic term coefficient $c_2$ of the energy-channel address calibration function is generally close to 0, the value of the constant term coefficient $c_0$ is also around 0, and the two hardly change with external conditions. Therefore, in the process of calculating the target coefficient of the present disclosure, the energy calibration function may be approximately expressed as Equation (3).

$$E = c_1 \times ch \quad (3)$$

According to the embodiments of the present disclosure, after the target coefficient is determined, the constant term coefficient and the quadratic term coefficient in Equation (2) may be calculated by using the channel address-energy coordinate system, and the target energy channel address function may be obtained finally.

FIG. 6 schematically shows a structure block diagram of an apparatus for determining an energy calibration of a radiation detector according to the embodiments of the present disclosure.

As shown in FIG. 6, an apparatus 600 for determining an energy calibration of a radiation detector includes an acquisition module 610, a differencing module 620, a first determination module 630, and a second determination module 640.

The acquisition module 610 is used to acquire a background energy spectrum of a plurality of known nuclides, where the background energy spectrum is obtained by the radiation detector detecting the plurality of known nuclides.

The differencing module 620 is used to perform a differential processing on the background energy spectrum to obtain a channel address-difference diagram, where the channel address-difference diagram includes a plurality of valid peak information determined from a plurality of full-energy peak information.

The first determination module 630 is used to determine a target coefficient according to the channel address-difference diagram, where the target coefficient characterizes a calibration coefficient in an initial energy channel address function.

The second determination module 640 is used to determine a target energy channel address function according to the channel address-difference diagram and the initial energy channel address function, where the target energy channel address function characterizes the energy calibration of the radiation detector.

According to the embodiments of the present disclosure, it is possible to obtain a channel address-difference diagram by performing a differential processing on the background energy spectrum obtained by detecting a plurality of known nuclides using the radiation detector to be corrected, determine a target coefficient in the initial energy channel address function based on the channel address-difference diagram, and determine the target energy channel address function by combining the channel address-difference diagram and the initial energy channel address function, so that the energy calibration of the radiation detector to be corrected may be corrected using the target energy channel address function, which may avoid a problem of an inaccurate detection result of the corrected radiation detector caused by manually performing an energy calibration using a radioactive source in the related art, and improve a correction efficiency and detection accuracy of the radiation detector.

According to the embodiments of the present disclosure, the first determination module 630 includes a first determination sub-module and a second determination sub-module.

The first determination sub-module is used to determine a plurality of target intervals of a target nuclide from the channel address-difference diagram, where the target intervals include a plurality of valid peak information of the target nuclide.

The second determination sub-module is used to determine the target coefficient according to the plurality of target intervals.

According to the embodiments of the present disclosure, the second determination sub-module includes a first obtaining unit and a determination unit.

The first obtaining unit is used to obtain, for each target interval, an initial weight according to a plurality of full-energy peak weighting coefficients and difference coefficients of the plurality of full-energy peak information.

The determination unit is used to determine the target coefficient according to a plurality of initial weights based on a predetermined filtering rule.

According to the embodiments of the present disclosure, the first obtaining unit includes a first determination sub-unit and an obtaining sub-unit.

The first determination sub-unit is used to determine, for each valid peak information, a product value according to the full-energy peak weighting coefficient corresponding to the valid peak information and the difference coefficient at a full-energy peak energy channel address in the valid peak information.

The obtaining sub-unit is used to sum a plurality of product values to obtain the initial weight of the target interval.

According to the embodiments of the present disclosure, the differential processing includes a second-order differential processing, and the difference coefficient includes a second-order difference coefficient.

According to the embodiments of the present disclosure, the determination unit includes a drawing sub-unit and a second determination sub-unit.

The drawing sub-unit is used to draw a weight-coefficient relationship diagram according to the plurality of initial weights, where a horizontal ordinate in the weight-coefficient relationship diagram represents a coefficient scale, and a vertical ordinate in the weight-coefficient relationship diagram represents a weight scale.

The second determination sub-unit is used to determine the horizontal ordinate corresponding to a maximum weight value in the weight-coefficient relationship diagram as the target coefficient.

According to the embodiments of the present disclosure, the second determination module 640 includes a constructing sub-module and a solving sub-module.

The constructing sub-module is used to construct a plurality of coordinate points in a channel address-energy coordinate system according to a channel address corresponding to each full-energy peak information in each target interval and a known full-energy peak energy of the target nuclide.

The solving sub-module is used to solve, based on the target coefficient, the initial energy channel address function according to the plurality of coordinate points to obtain the target energy channel address function.

According to the embodiments of the present disclosure, the solving sub-module includes a fitting unit, a solving unit, and a second obtaining unit.

The fitting unit is used to fit the plurality of coordinate points in the channel address-energy coordinate system to obtain a target curve.

The solving unit is used to solve the initial energy channel address function by using the target curve to obtain a constant term coefficient and a quadratic term coefficient, where the target coefficient characterizes a primary term coefficient.

The second obtaining unit is used to obtain, based on the initial energy channel address function, the target energy channel address function according to the constant term coefficient, the target coefficient and the quadratic term coefficient.

According to the embodiments of the present disclosure, any number of the acquisition module 610, the differencing module 620, the first determination module 630 and the second determination module 640 may be combined into one module for implementation, or any one of the modules may be divided into a plurality of modules. Alternatively, at least part of the functions of one or more of these modules may be combined with at least part of the functions of other modules and implemented in one module. According to the embodiments of the present disclosure, at least one of the acquisition module 610, the differencing module 620, the first determination module 630 and the second determination module 640 may be implemented at least partially as a hardware circuit, such as a field programmable gate array

(FPGA), a programmable logic array (PLA), a system on a chip, a system on a substrate, a system on a package, an application specific integrated circuit (ASIC), or may be implemented by hardware or firmware in any other reasonable manner of integrating or encapsulating the circuit, or may be implemented by any one of the three implementation modes of software, hardware, and firmware or an appropriate combination thereof. Alternatively, at least one of the acquisition module 610, the differencing module 620, the first determination module 630 and the second determination module 640 may be at least partially implemented as a computer program module that may perform corresponding functions when executed.

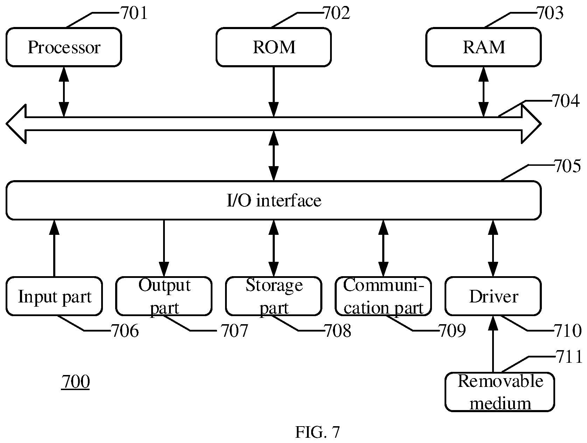

FIG. 7 schematically shows a block diagram of an electronic device suitable for implementing the method for determining the energy calibration of the radiation detector according to the embodiments of the present disclosure.

As shown in FIG. 7, an electronic device 700 according to the embodiments of the present disclosure includes a processor 701, which may execute various appropriate actions and processes according to the program stored in a read-only memory (ROM) 702 or the program loaded into a random access memory (RAM) 703 from a storage part 708. The processor 701 may, for example, include a general-purpose microprocessor (for example, a CPU), an instruction set processor and/or a related chipset and/or a special-purpose microprocessor (for example, an application specific integrated circuit (ASIC)), and the like. The processor 701 may further include an on-board memory for caching purposes. The processor 701 may include a single processing unit or a plurality of processing units for executing different actions of the method flow according to the embodiments of the present disclosure.

Various programs and data required for the operation of the device 700 are stored in the RAM 703. The processor 701, the ROM 702, and the RAM 703 are connected to each other through a bus 704. The processor 701 executes various operations of the method flow according to the embodiments of the present disclosure by executing the programs in the ROM 702 and/or the RAM 703. It should be noted that the program may also be stored in one or more memories other than ROM 702 and RAM 703. The processor 701 may also execute various operations of the method flow according to the embodiments of the present disclosure by executing programs stored in the one or more memories.

According to the embodiments of the present disclosure, the electronic device 700 may further include an input/output (I/O) interface 705 which is also connected to the bus 704. The electronic device 700 may further include one or more of the following components connected to the I/O interface 705: an input part 706 including a keyboard, mouse, etc.; an output part 707 including a cathode ray tube (CRT), a liquid crystal display (LCD), a speaker, etc.; a storage part 708 including a hard disk, etc.; and a communication part 709 including a network interface card, such as a LAN card, a modem, and the like. The communication part 709 performs communication processing via a network such as the Internet. A driver 710 is also connected to the I/O interface 705 as required. A removable medium 711, such as a magnetic disk, an optical disk, a magneto-optical disk, a semiconductor memory, and the like, is installed on the drive 710 as required, so that a computer program to be read therefrom is installed into the storage part 708 as required.

The present disclosure further provides a computer-readable storage medium, which may be included in the device/apparatus/system described in the above embodiments; or exist alone without being assembled into the device/apparatus/system. The above-mentioned computer-readable storage medium carries one or more programs that when executed, perform the methods of the embodiments of the present disclosure.

According to the embodiments of the present disclosure, the computer-readable storage medium may be a non-volatile computer-readable storage medium, for example, may include but not limited to, a portable computer disk, a hard disk, a random access memory (RAM), a read-only memory (ROM), an erasable programmable read-only memory (EPROM or flash memory), a portable compact disk read-only memory (CD-ROM), an optical memory device, a magnetic memory device, or any suitable combination of the above. In the present disclosure, the computer-readable storage medium may be any tangible medium that contains or stores programs that may be used by or in combination with an instruction execution system, apparatus, or device. For example, according to the embodiments of the present disclosure, the computer-readable storage medium may include the above-mentioned ROM 702 and/or RAM 703 and/or one or more memories other than the ROM 702 and RAM 703.

The embodiments of the present disclosure further include a computer program product, which contains a computer program. The computer program contains program code for performing the method shown in the flowchart. When the computer program product runs in a computer system, the program code causes the computer system to implement the method of the embodiments of the present disclosure.

When the computer program is executed by the processor 701, the above-mentioned functions defined in the system/apparatus of embodiments of the present disclosure are performed. According to the embodiments of the present disclosure, the above-described systems, apparatuses, modules, units, etc. may be implemented by computer program modules.

In an embodiment, the computer program may rely on a tangible storage medium such as an optical storage device and a magnetic memory device. In another embodiment, the computer program may also be transmitted and distributed in the form of signals on a network medium, downloaded and installed through the communication part 709, and/or installed from the removable medium 711. The program code contained in the computer program may be transmitted by any suitable medium, including but not limited to a wireless one, a wired one, or any suitable combination of the above.

In such embodiments, the computer program may be downloaded and installed from the network through the communication part 709, and/or installed from the removable medium 711. When the computer program is executed by the processor 701, the above-mentioned functions defined in the system of embodiments of the present disclosure are performed. According to the embodiments of the present disclosure, the above-mentioned systems, devices, apparatuses, modules, units, etc. may be implemented by computer program modules.

According to the embodiments of the present disclosure, the program code for executing computer programs provided by the embodiments of the present disclosure may be written in any combination of one or more programming languages. In particular, these computing programs may be implemented using high-level procedures and/or object-oriented programming languages, and/or assembly/machine languages. Programming languages include, but are not limited to, Java, C + +, python, the "C" language, or similar programming languages. The program code may be completely executed on the user computing device, partially on the user device, partially on the remote computing device, or completely executed on the remote computing device or server. In a case of involving a remote computing device, the remote computing device may be connected to a user computing device through any kind of network, including a local area network (LAN) or a wide area network (WAN), or may be connected to an external computing device (e.g., through the Internet using an Internet service provider).

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be performed by a combination of dedicated hardware and computer instructions.

Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

The embodiments of the present disclosure have been described above. However, these embodiments are for illustrative purposes only and are not intended to limit the scope of the present disclosure. Although the various embodiments have been described separately above, this does not mean that the measures in the respective embodiments may not be used in combination advantageously. The scope of the present disclosure is defined by the attached claims and their equivalents. Those skilled in the art may make various substitutions and modifications without departing from the scope of the present disclosure, and these substitutions and modifications should all fall within the scope of the present disclosure.

**Claims**

1. A method for determining an energy calibration of a radiation detector, comprising:

   acquiring a background energy spectrum of a plurality of known nuclides, wherein the background energy spectrum is obtained by the radiation detector detecting the plurality of known nuclides;
   performing a differential processing on the background energy spectrum to obtain a channel address-difference diagram, wherein the channel address-difference diagram comprises a plurality of valid peak information determined from a plurality of full-energy peak information;
   determining a target coefficient according to the channel address-difference diagram, wherein the target coefficient characterizes a calibration coefficient in an initial energy channel address function; and
   determining a target energy channel address function according to the channel address-difference diagram and the initial energy channel address function, wherein the target energy channel address function characterizes the energy calibration of the radiation detector.

2. The method according to claim 1, wherein the determining a target coefficient according to the channel address-difference diagram comprises:

   determining a plurality of target intervals of a target nuclide from the channel address-difference diagram, wherein the target intervals comprise a plurality of valid peak information of the target nuclide; and

determining the target coefficient according to the plurality of target intervals.

3. The method according to claim 2, wherein the determining the target coefficient according to the plurality of target intervals comprises:

   obtaining, for each target interval, an initial weight according to a plurality of full-energy peak weighting coefficients and difference coefficients of the plurality of full-energy peak information; and
   determining the target coefficient according to a plurality of initial weights based on a predetermined filtering rule.

4. The method according to claim 3, wherein the obtaining an initial weight according to a plurality of full-energy peak weighting coefficients and difference coefficients of the plurality of full-energy peak information comprises:

   determining, for each valid peak information, a product value according to the full-energy peak weighting coefficient corresponding to the valid peak information and the difference coefficient at a full-energy peak energy channel address in the valid peak information; and
   summing a plurality of product values to obtain the initial weight of the target interval.

5. The method according to claim 4, wherein the differential processing comprises a second-order differential processing, and the difference coefficient comprises a second-order difference coefficient.

6. The method according to claim 3, wherein the determining the target coefficient according to a plurality of initial weights based on a predetermined filtering rule comprises:

   drawing a weight-coefficient relationship diagram according to the plurality of initial weights, wherein a horizontal ordinate in the weight-coefficient relationship diagram represents a coefficient scale, and a vertical ordinate in the weight-coefficient relationship diagram represents a weight scale; and
   determining the horizontal ordinate corresponding to a maximum weight value in the weight-coefficient relationship diagram as the target coefficient.

7. The method according to claim 2, wherein the determining a target energy channel address function according to the channel address-difference diagram and the initial energy channel address function comprises:

   constructing a plurality of coordinate points in a channel address-energy coordinate system according to a channel address corresponding to each full-energy peak information in each target interval and a known full-energy peak energy of the target nuclide; and
   solving, based on the target coefficient, the initial energy channel address function according to the plurality of coordinate points to obtain the target energy channel address function.

8. The method according to claim 7, wherein the solving the initial energy channel address function according to the plurality of coordinate points to obtain the target energy channel address function comprises:

   fitting the plurality of coordinate points in the channel address-energy coordinate system to obtain a target curve;
   solving the initial energy channel address function by using the target curve to obtain a constant term coefficient and a quadratic term coefficient, wherein the target coefficient characterizes a primary term coefficient; and
   obtaining, based on the initial energy channel address function, the target energy channel address function according to the constant term coefficient, the target coefficient and the quadratic term coefficient.

9. The method according to claim 3, wherein the initial weight is expressed by Equation (1) and the initial energy channel address function is expressed by Equation (2):

$$W_j = \sum_{i=1}^{m} \left( w_{i,j} \times \sec_{i,j} \right) \tag{1}$$

$$E = c_0 + c_1 \times ch + c_2 \times ch^2 \tag{2}$$

where $W_j$ represents an initial weight of a $j^{th}$ target interval; $w_{i,j}$ represents an $i^{th}$ full-energy peak weighting coefficient in the $j^{th}$ target interval; $sec_{i,j}$ represents a difference coefficient at an $i^{th}$ full-energy peak energy channel address in the $j^{th}$ target interval, E represents a full-energy peak energy of γ-rays, ch represents a full-energy peak channel address of the rays, and $c_0$, $c_1$ and $c_2$ are a constant term coefficient, a target coefficient and a quadratic term coefficient to be calculated, respectively.

10. An apparatus for determining an energy calibration of a radiation detector, comprising:

an acquisition module configured to acquire a background energy spectrum of a plurality of known nuclides, wherein the background energy spectrum is obtained by the radiation detector detecting the plurality of known nuclides;
a differencing module configured to perform a differential processing on the background energy spectrum to obtain a channel address-difference diagram, wherein the channel address-difference diagram comprises a plurality of valid peak information determined from a plurality of full-energy peak information;
a first determination module configured to determine a target coefficient according to the channel address-difference diagram, wherein the target coefficient characterizes a calibration coefficient in an initial energy channel address function; and
a second determination module configured to determine a target energy channel address function according to the channel address-difference diagram and the initial energy channel address function, wherein the target energy channel address function characterizes the energy calibration of the radiation detector.

11. An electronic device, comprising:

one or more processors;
a storage means for storing one or more programs,
wherein the one or more programs are configured to, when executed by the one or more processors, cause the one or more processors to implement the method of any one of claims 1 to 9.

12. A computer readable storage medium having executable instructions thereon, wherein the instructions are configured to, when executed by a processor, cause the processor to implement the method of any one of claims 1 to 9.

13. A computer program product containing a computer program, wherein the computer program is configured to, when executed by a processor, cause the process to implement the method of any one of claims 1 to 9.

S110

A background energy spectrum of a plurality of known
nuclides is acquired, where the background energy spectrum is
obtained by the radiation detector detecting the plurality of
known nuclides

S120

A differential processing is performed on the background
energy spectrum to obtain a channel address-difference
diagram

S130

A target coefficient is determined according to the channel
address-difference diagram, where the target coefficient
characterizes a calibration coefficient in an initial energy
channel function

S140

A target energy channel function is determined according to
the channel address-difference diagram and the initial energy
channel function

FIG. 1

FIG. 2

FIG. 3

FIG. 4

$$E=0.0703+0.185*ch-5.4232e^{-9}*ch^2$$

FIG. 5

FIG. 6

Processor —701

ROM —702

RAM —703

—704

—705

I/O interface

Input part | Output part | Storage part | Communi-cation part | Driver

—706 —707 —708 —709 —710

—711

Removable medium

700

FIG. 7

## INTERNATIONAL SEARCH REPORT

| | International application No. |
|---|---|
| | **PCT/CN2024/076343** |

**A. CLASSIFICATION OF SUBJECT MATTER**

G01T 1/38(2006.01)i

According to International Patent Classification (IPC) or to both national classification and IPC

**B. FIELDS SEARCHED**

Minimum documentation searched (classification system followed by classification symbols)

IPC:G01T 1/-,G01V 5/-,G01N 23/-

Documentation searched other than minimum documentation to the extent that such documents are included in the fields searched

Electronic data base consulted during the international search (name of data base and, where practicable, search terms used)

CNTXT; CNABS; WPABSC; ENTXTC; WEB OF KNOWLEDGE, CNKI: 放射性探测器, 能量刻度, 确定, 核素, 本底能谱, 差分, 道址, 有效峰信息, 目标系数, 能量道址函数式; Radioactivity detector, energy scale, determination, nuclide, background spectrum, differential, channel address, effective peak information, target coefficient, energy channel address function formula

**C. DOCUMENTS CONSIDERED TO BE RELEVANT**

| Category* | Citation of document, with indication, where appropriate, of the relevant passages | Relevant to claim No. |
|---|---|---|
| A | CN 111538069 A (CHINA INSTITUTE OF ATOMIC ENERGY) 14 August 2020 (2020-08-14)<br>description, paragraphs 1-68 | 1-13 |
| A | CN 109239758 A (SOUTH CHINA SEA ENVIRONMENTAL MONITORING CENTER OF THE STATE OCEANIC ADMINISTRATION (CHINA MARINE SURVEILLANCE SOUTH CHINA SEA INSPECTION AND APPRAISAL CENTER)) 18 January 2019 (2019-01-18)<br>entire document | 1-13 |
| A | DE 102007027460 A1 (SIEMENS AG) 24 December 2008 (2008-12-24)<br>entire document | 1-13 |
| A | RU 2008703 C1 (VSESOYUZNYJ NAUCHNO-ISSLEDOVATELSKIJ INSTITUT RAZVEDOCHNOJ GEOFIZIKI) 28 February 1994 (1994-02-28)<br>entire document | 1-13 |
| A | RU 2034314 C1 (NAUCHNO-PROIZVODSTVENNOE OB'EDINENIE 'TAJFUN') 30 April 1995 (1995-04-30)<br>entire document | 1-13 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2024** | **16 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/076343** |

**C.    DOCUMENTS CONSIDERED TO BE RELEVANT**

| Category* | Citation of document, with indication, where appropriate, of the relevant passages | Relevant to claim No. |
|---|---|---|
| A | US 2021355822 A1 (PETROCHINA CO., LTD.) 18 November 2021 (2021-11-18) entire document | 1-13 |

Form PCT/ISA/210 (second sheet) (July 2022)

**INTERNATIONAL SEARCH REPORT**
**Information on patent family members**

International application No.

**PCT/CN2024/076343**

| Patent document cited in search report | | | Publication date (day/month/year) | Patent family member(s) | | | Publication date (day/month/year) |
|---|---|---|---|---|---|---|---|
| CN | 111538069 | A | 14 August 2020 | None | | | |
| CN | 109239758 | A | 18 January 2019 | None | | | |
| DE | 102007027460 | A1 | 24 December 2008 | DE | 102007027460 | B4 | 23 March 2017 |
| RU | 2008703 | C1 | 28 February 1994 | None | | | |
| RU | 2034314 | C1 | 30 April 1995 | None | | | |
| US | 2021355822 | A1 | 18 November 2021 | WO | 2019128685 | A1 | 04 July 2019 |
| | | | | US | 11313223 | B2 | 26 April 2022 |
| | | | | GB | 202003863 | D0 | 29 April 2020 |
| | | | | GB | 2581039 | A | 05 August 2020 |
| | | | | GB | 2581039 | B | 19 May 2021 |

Form PCT/ISA/210 (patent family annex) (July 2022)

**EP 4 530 681 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310134373